# EUROPEAN PATENT APPLICATION

(11) **EP 4 067 536 A1**
(43) Date of publication of application: **05.10.2022**
(21) Application number: 20892041.3
(22) Date of filing: 25.08.2020
(51) Int. Cl.: C25C 3/00

(54) **METHOD FOR RECYCLING THE LINING MATERIAL OF AN ELECTROLYSIS CELL CATHODE ASSEMBLY AND DEVICE FOR THE IMPLEMENTATION THEREOF**

(30) Priority: 25.11.2019 RU 2019137850
(71) Applicant: Obshchestvo S Ogranichennoy Otvetstvennost'yu "Obedinennaya Kompaniya Rusal Inzhenerno- Tekhnologicheskiy Tsentr", G. Krasnoyarsk 660111 (RU)
(72) Inventor: Proshkin, Aleksandr Vladimirovich, 660111 Krasnoyarsk (RU); Sbitnev, Andrej Gennad'evich, 660111 Krasnoyarsk (RU); SBITNEV, Andrej Gennad'evich, Krasnoyarsk, 660111 (RU); GOLDOBIN, Vyacheslav Andreevich, Krasnoyarsk, 660111 (RU); MOROZOV, Aleksej Vasil'evich, Krasnoyarsk, 660111 (RU); PINGIN, Vitalij Valer'evich, Krasnoyarsk, 660111 (RU); ZHERDEV, Aleksej Sergeevich, Krasnoyarsk, 660111 (RU)
(74) Representative: Tobiasz-Dumania, Katarzyna
(86) International application number: PCT/RU2020/050201
(87) International publication number: WO 2021/107813

(57) **Abstract**

A recycling method in which spent lining material is extracted by cutting an access opening into the bottom part of a side wall of the shell of an electrolysis cell cathode assembly, removing the brick lining at the bottom of the side wall of the pedestal, extracting non-graphitic carbon, conveying same to the installation site of a cathode assembly of the electrolysis cell and pouring the non-graphitic carbon into said cathode assembly. The spent lining material is extracted by means of the reciprocating movement of a device for recycling spent lining materials. Said device for recycling spent lining materials is configured in the form of a screw-type working member which moves through the access opening into the cathode assembly of the electrolysis cell along a cantilevered guiding support for a roller with the aid of a carriage which has a bucket conveyor disposed in the centre part thereof for moving the extracted material from the outlet end of the screw conveyor into a bin disposed behind the bucket conveyor.

## Description

### Field of the invention

The invention refers to the non-ferrous metallurgy, in particular to electrolytic reduction of aluminium, and it can be used for lining of pot cathodes.

### Background of the invention

An aluminium pot cathode consists of a shell, carbon lining (bottom and side), and refractory/insulation lining. A pot is installed in the shell for the reduction process. The pot base is made of carbon graphite current-conducting bottom blocks, while the pot side walls are chemically resistant silicon carbide or carbon blocks. The pot lower part is insulated to ensure the required reduction temperatures. Bottom blocks are made of a heterogeneous material, therefore aggressive fluorine-containing components and sodium vapours penetrate through pores to lower layers, where heat insulation materials are located, under action of gravity and surface tension forces during aluminium reduction. Upon contact with fluorides and sodium, heat insulation loses its properties, because it has highly-developed surface and chemically reacts with fluorides. Due to decrease of thermal resistance, the work surface temperature of the bottom blocks drops, which results in crystallisation of fluorides and slowdown of the alumina dissolution process. Formation of non-conductive ledges and sludge results in an upset of the reduction process.

For protection of heat insulation materials against direct exposure to fluorides and high temperatures, barrier (refractory) materials are placed between the bottom blocks and heat insulation layers. Refractory and heat insulation materials in form of bricks with various sizes are usually used during installation of pots. Upon expiration of service life, toxic water-soluble fluorides and cyanides are formed in them. They condition high environmental hazard of spent materials, therefore wastes generated from electrolytic reduction of aluminium are subject to temporary and permanent storage in specially equipped waste disposal areas. However, walls of a waste disposal area often cannot be sealed under the sharp continental climate conditions and toxic components diffuse to the environment. Therefore, special concrete facilities are built at new smelters to protect wastes against penetration of atmospheric precipitation. This increases storage cost, not yet solving the main problem - elimination of the environment pollution. In addition, the earlier acceptable storage payment can be increased with significant economic consequences for aluminium producers.

There are various methods for processing of spent lining materials. For example, the processes of caustic digestion, vacuum distillation, and carbonate baking are used for cryolite extraction, while hydration is used for carbon recycling. There are widely known methods of waste utilisation as fuels and mineral additives in the cement industry, as fluxing additives in the steel industry, as well as combustion of carbon parts from spent lining for power engineering purposes. However, it should be noted that there is no technical solution for both domestic and foreign aluminium producers so far, which would allow them to overcome the problem of spent cathode lining recycling at an acceptable cost. Economic value of the regenerated product does not exceed its processing cost so far and neither of the existing storage/recycling methods is economically efficient. The most profitable processing method of spent lining materials is their recycling.

There is a well known lining method (SU1183564A1, October 7th, 1985) including: installation of heat insulation via sequential filling and compaction of deep-calcined alumina to the cathode shell in two layers with different density - upper layer with density of 1.2-1.8 t/m³ and lower layer with density of 0.8-1.1 t/m³; laying of a barrier made of refractory bricks; installation of bottom/side blocks followed by closure of joints between them with cold ramming paste. Upon expiration of the pot life, alumina is removed from its shell and sent to an operating pot as a raw material to produce aluminium, which increases the economic efficiency through both aluminium production and lower costs for storage of generated wastes.

The disadvantages of this lining method are problems related to selective separation of alumina from other lining materials, difficult dissolution of deep-calcined alumina, as well as its high cost due to the need for precalcination at temperatures over 1200°C.

There is a well-known aluminium pot cathode lining method (RU2221087C2, January 10th, 2004) including: filling of a refractory layer made of demounted pot refractory lining as powder with fractions of 2-20 mm on a heat insulation layer made of high-porous graphite, in particular coked cellular material, at corrosion rate in the aluminium melt and cryolite-alumina melt not more than 0.03 and 0.05 mm/day.

The disadvantages of this lining method are additional CAPEX / energy costs for milling of spent refractory lining to powders with fractions of 2-20 mm and low protective properties of the refractory layer impregnated with fluorides resulting in growth of energy costs during operation of the pot.

The aluminium pot cathode lining method (RU2608942C1, January 26th, 2017), which is the closest method by technical substance to the claimed invention, includes: filling of a heat insulation layer using non-graphitic carbon (also preextracted from the lower sublayer of the heat insulation layer from the earlier spent pot cathode) to the cathode shell; formation of a refractory layer; installation of bottom/side blocks followed by closure of joints between them with cold ramming paste. As in the above method, the spent lining material is got via sequential breakdown of the bottom blocks and barrier layer using a hydraulic hammer followed by extraction of the lower sublayer of the heat insulation layer using an excavator and its filling to the upper sublayer of the heat insulation layer for recycling.

The disadvantages of this lining method are problems related to selective separation of the heat insulation material not reacted with aggressive components (sodium, aluminium) in the pot and keeping its initial properties from the spent cathode blocks and refractory (barrier) materials - accompanied with unsatisfactory sanitary-hygienic work environment of personnel due to material dusting.

The significant disadvantage of the conventional lining materials in form of aluminosilicate bricks and heat insulation slabs is incapability of their recycling after expiration of service life due to inevitable breakdown during demounting.

Unshaped materials in disperse state are to a great extent free of this disadvantage. However, aluminosilicate unshaped materials turn into monolith by the end of service life as a result of reactions with sodium and fluorides. High density of such monolith materials conditions heavy weight of wastes sent for storage. At the same time, the toxic nature of spent pot lining materials is the main cause of environmental problems occurring in the aluminium industry. The main environmental impact is associated with significant quantities of water-soluble fluorides and cyanides. Washout products from spent lining disposal areas can pollute ground water or effluents. In addition, explosive gases are formed in layers of spent refractory materials kept in disposal areas as a result of oxidation by air and exposure to moisture.

### Summary of the invention

The invention is based on the development task of a recycling method for pot cathode lining materials to be applied in electrolytic reduction of aluminium aimed at less environment pollution and lower production cost of aluminium.

The technical result, which can be achieved with the claimed invention, is less generation of wastes during aluminium production. These wastes are hazardous for the environment and subject to disposal after pot demounting. This result will give an economic effect - lower financial costs for purchase of new lining materials through their recycling and consequent lower production cost of aluminium. So, the advantage from recycling of lining materials is not only a financial aspect. Application of recycling in electrolytic reduction of aluminium solves to a great extent the environment protection problems.

The set task is solved and the technical result is achieved with the proposed recycling method for aluminium pot cathode lining materials.

The most efficient lining material is non-graphitic carbon. Non-graphitic carbon can be charcoal, whose material composition includes 95% of carbon, porosity reaches 70-80%, and volatile-matter yield is 3-12%. Non-graphitic carbon also can be partially carbonised lignite, such as the pyrolysis product of Kansk-Achinsk brown coals. As shown by long-term studies (A. Proshkin et al. A New Lining Material for Aluminium Electrolysis Cells That Can Be Recycled. The paper was presented at the 34th Conference & Exhibition of ICSOBA, Quebec, Canada, October 3rd-6th, 2016), this product can be successfully used in pot cathodes as a heat insulation and refractory material at the same time.

Non-graphitic carbon has good physical-chemical and thermophysical properties. In particular, density of such material is lesser than density of conventional refractory materials by more than three times and consequently it has lower heat conduction. In addition, this material has high chemical resistance to both sodium/aluminium and fluorides. Finally, non-graphitic carbon has a lower cost versus conventional refractory materials. Thanks to the available raw material base - huge coal reserves and consistently low cost, non-graphitic carbon including partially carbonised lignite can be a serious alternative to conventional refractory materials. Autopsies of pots with various lives show that middle and lower layers made of this material keep their properties and at least 80% of their initial weight can be recycled (A. Proshkin et al. New resource-saving technologies for lining the cathode with unshaped lining materials. Light Metals, 2019, pages 573-582).

The cathode has a shell, which houses all lining structures: a lower heat insulation layer of unshaped lining materials located on the shell bottom and made of fresh non-graphitic carbon; covered by a heat insulation layer of unshaped lining materials made of recycled non-graphitic carbon; and two upper layers of barrier (refractory) materials above them. The aforesaid four layers of lining materials form a pedestal with the crown and edge brickwork on its outer surface. The lower part of the peripheral brickwork (crown) is located under the cathode block plane, while the upper part (edge) serves for sealing of the cathode block outcrops from the cathode shell.

Lining materials are recycled as follows. For extraction of the spent lining material, at least one process aperture is cut in the end wall of the pot cathode shell at level of the non-graphitic carbon layers and the crown brickwork of the pedestal end wall is removed. The spent lining material is extracted, transferred to the installation location of the next aluminium pot cathode, and filled to this cathode as the lining material of the upper heat insulation layer. For this purpose, the hopper with the extracted lining material can be placed to a unit for installation in the next cathode. Then, the material is filled from it immediately to this cathode cavity. So, the lining material can be repeatedly recycled in quantity not less than 80% of the initial non-graphitic carbon weight, while remaining 20% of weight become monolithic jointly with the above barrier layer and cannot be recycled in this connection.

The proposed recycling method is supplemented by specific options of the invention implementation.

The spent lining material can be extracted through both end walls of the pot cathode.

The spent lining material can be extracted by reciprocating motion of the spent lining material recycler, which has a screw work tool comprising at least one horizontal screw and capable to travel using a carriage fitted with a bucket elevator. So, the inlet end of the screw work tool can get inside the cathode and go out of it through at least one process aperture precut in the cathode end wall for extraction of the spent lining material and its transfer using the bucket elevator to the hopper.

The invention also refers to the lining material recycler for aluminium pot cathodes, which represents a screw work tool comprising at least one horizontal screw and capable to travel using a carriage fitted with a bucket elevator. So, the inlet end of the screw work tool gets inside the cathode through at least one process aperture precut in the shell end wall for extraction of the spent lining material and its transfer using the bucket elevator to the hopper.

The spent lining material can be extracted by reciprocating motion of the screw work tool.

The screw tool can be supported by a guide roller fixed on the shell using two brackets (consoles). For that, a roller guide support is installed in the cathode end wall in front of the process aperture using brackets.

The screw work tool may be capable to travel on the roller guide support.

The screw work tool consists of at least one screw representing a shaft with a helical spiral fixed in bearing supports and connected by a chain gear to an electric drive.

The inlet end of each screw can be fitted with a hard-alloy drill head.

The screw work tool may represent four horizontal screws enclosed in a single housing connected by a chain gear to an electric drive.

The screw work tool is controlled by a frequency converter, which allows soft start of the screws, increasing/decreasing their rotation speed if necessary, and reversing.

The screw diameter is nearly equal to total height of two heat insulation layers made of non-graphitic carbon or somewhat lesser.

Four screws are optimal. If quantity of screws is more than four, this complicates the drive design and decreases the unit mobility necessary to bypass local spots of crystalline bath leaks, which have very high strength and cannot be broken by hard-alloy heads of the screws. If quantity of screws is less than four, this decreases the unit capacity and efficiency.

The outlet end of the screw work tool is connected to a carriage receiver made as a combination of a conical funnel and a cylinder below it, which is inserted to a power fitting. It is installed on the carriage steering pillar and capable to vertically travel using a winch. An O-ring is used for sealing of the receiver connection and power fitting.

An electromechanical vibrator is provided to prevent from the material hanging-up at the outlet end of the screw work tool.

The hopper for receipt of the extracted material has a pyramidal-prismatic shape. The lower part is made in form of a truncated pyramid reinforced with stiffening ribs, while the upper part is a prism.

A sector gate driven by a gear motor on the cage prismatic part is installed in the hopper lower part to prevent from the material spillage.

The hopper and bucket elevator are installed on the carriage consisting of a spatial bearing frame fitted with rear drive wheels and front steering wheels.

The travelling mechanism is driven by a two-stage worm gear motor installed on the carriage frame. The motor output shaft is connected to the driving axle by a chain gear.

The cathode lining is formed with the method including: filling of two heat insulation layers of non-graphitic carbon (also preextracted from the earlier spent pot cathode) to the cathode shell; formation of refractory layers; installation of bottom/side blocks followed by closure of joints between them with cold ramming paste.

Comparative analysis of features between the claimed solution and closest equivalent indicates that capability of access to the recycled material through the cathode end walls is unknown and not supposed by specialists. Hence, the claimed recycling method for spent lining materials is new and not obvious for a specialist in this technical area.

The lining material recycler is also new and not obvious for a specialist in this technical area, since such configuration of the unit parts for its application for the specified purposes is also unknown. Each applied part of the proposed unit (screw, bucket elevator, and hopper) is known, but their combination on the carriage as applied to the set task is original and it has features of a technical novelty. So, the screw work tool can consist of one or several (optimally four) co-rotating horizontal screws in the single housing and with the single drive. Quantity of the screws is optimal with regard to both mobility of the unit capable to bypass leak spots and ease of simultaneous operation. Application of the sealed hopper with lower material discharging, but upper loading using the bucket elevator allows minimum material dusting and dust-free laying of the recycled material to the next pot.

### Brief description of drawings

Figs. 1a and 1b show the sections of the pot cathode shell end lining with the spent lining material recycler.
Figs. 2a and 2b show the top and front views of the spent lining material recycler in the operating position with the aluminium pot cathode.
Figs. 3a and 3b show the section of the screw work tool in front of the supporting guide roller and view of its drive.
Fig. 4 shows the deformation test results of the initial and spent non-graphitic carbon materials.

### Detailed disclosure of the invention

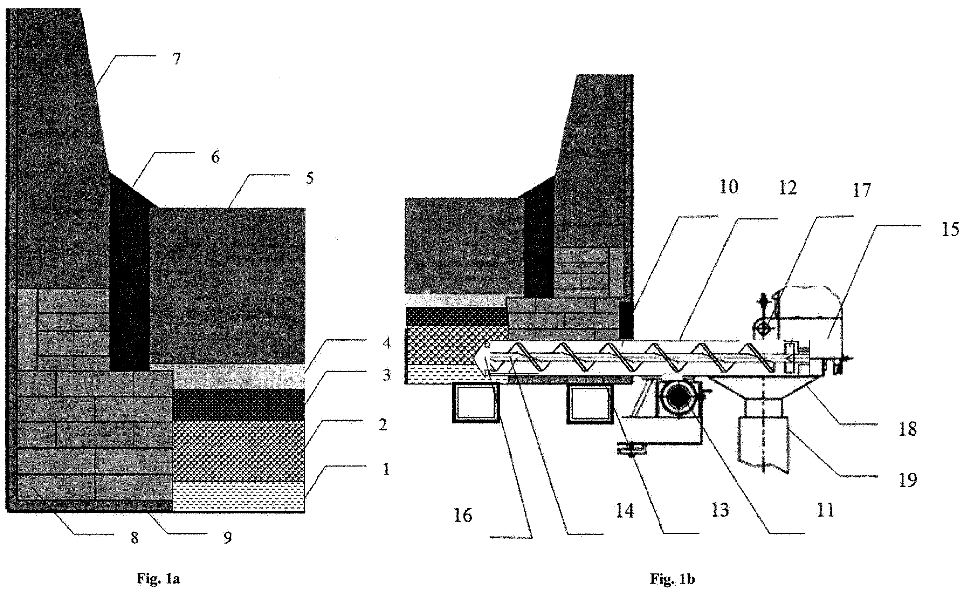

The cathode pedestal was lined with non-graphitic carbon in form of partially carbonised lignite covered with a layer of dry barrier mix (Fig. 1a). After 30 months of operation, the pot was exposed to an autopsy, which showed that samples of the non-graphitic carbon lining material taken from the upper (U), middle (M), and lower (L) parts of the non-graphitic carbon layer represented a bulk material by appearance and properties.

### Table 1 gives grain size distribution in the specimens of the initial non-graphitic carbon lining material and those taken after its operation.

**Table 1**

| Grain size distribution in the specimens | | | | | |
|---|---|---|---|---|---|
| Material | Grain size distribution, mm | | | | |
| | +2 | -2/+1 | -1/+0.63 | - 0.63/+0.315 | -0.315 |
| Initial | 6.2 | 9.3 | 25.2 | 23.9 | 35.4 |
| U | 1.4 | 6.3 | 24.0 | 46.3 | 21.5 |
| M | 0.9 | 4.8 | 16.9 | 48.5 | 28.4 |
| L | 6.4 | 8.6 | 21.9 | 42.2 | 21.5 |

As Table 1 shows the spent material has somewhat higher share of fine fractions in range of 0.63-0.315 mm versus the initial material. However, bulk density and heat conduction coefficient of the initial and spent materials are almost identical (Table 2).

**Table 2**

| Physical properties of the non-graphitic carbon lining material before and after operation | | |
|---|---|---|
| Material | Bulk density, kg/m³ | Heat conduction coefficient at bulk density, W/(m- K) |
| Initial | 500 | 0.112 |
| U | 508 | 0.117 |
| M | 507 | 0.120 |
| L | 501 | 0.110 |

Deformation properties of non-graphitic carbon were assessed by a conventional parameter of deformation resistance of the initial and spent materials similar to proportional factor of the 'deformation-stress' dependence.

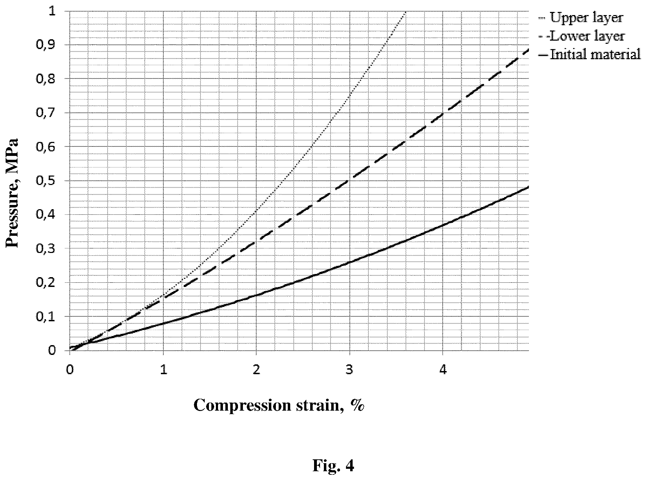

All materials were precompacted to initial density p=600 kg/m³. The conventional parameter of deformation resistance was calculated in the initial zone of the compaction curves: E=17 MPa for the upper layer, E=14-15 MPa for the lower layer, respectively (Fig. 4). The spent material samples contain more fine fractions versus the initial material according to grain size measurement data. This promotes more dense and homogeneous microstructure after compaction and consequently a stronger material. For example, E for the upper layer of the spent lining material is roughly twice as high versus the initial material (Eᵢₙᵢₜ = 8 MPa).

Phase composition of the spent lining material is given in Table 3.

**Table 3**

| Phase composition of the spent lining material | | | | |
|---|---|---|---|---|
| Substance | Mineral | U | M | L |
| C^{∗} | Carbon | 89.20 | 87 | 89 |
| CaF₂ | Fluorite | 4.22 | 4.27 | 2.6 |
| SiO₂ | Quartz | 1.96 | 4.21 | 3.4 |
| CaCO₃ | Calcite | 2.09 | 3.4 | 2.55 |
| CaMg(CO₃)₂ | Dolomite | 2.5 | 1.06 | 2.38 |

As the given data show, the variations of material composition are also insignificant. Concentration of sodium cyanides in non-graphitic carbon is also insignificant - just 1-2 ppm.

As the main result of the autopsy, we may consider confirmation of the recycling capability of the non-graphitic carbon lining material. All upper aluminosilicate lining materials are sintered and they become monolithic. Hence, their recycling is impossible. Quantity of the seemingly intact and ready for recycling non-graphitic carbon lining material is more than 80% wt of the initial material quantity. The remaining material in quantity less than 20% wt is sent jointly with the spent bottom block materials and fluorides to storage in special facilities, or for utilisation as fuel during production of building materials, or for application as fluxes in the ferrous metallurgy.

So, the analysis of the lining material properties after 30 months of operation shows that non-graphitic carbon can be recycled in environmentally safe conditions, since it keeps the initial material composition, heat conduction coefficient, and deformation properties, as well as it has low content of cyanides. As distinct from the prototype, the recycled material does not need additional treatment and it has no restrictions for its safe extraction and recycling.

The cathode design with the recycled lining material (Figs. 1a, 1b) provides for application of unshaped lining materials comprising two layers of non-graphitic carbon filled to the cathode shell bottom and two upper layers of barrier (refractory) materials above them.

Lower layer 1 consists of fresh non-graphitic carbon, while layer 2 above it consists of recycled non-graphitic carbon. Layer 2 is covered by layer 3 made of the aluminosilicate barrier material with low heat conduction, which actively reacts with sodium to decrease formation intensity of cyanides in the non-graphitic carbon material intended for recycling. Layer 3 is covered by upper layer 4 made of the aluminosilicate material with high density and cryolite resistance, which is intended for formation of viscous glass to slow down penetration of the bath liquid phase to the cathode lower part.

Cathode blocks 5 are placed to the compacted pedestal made of the materials in layers 1-4 and connected with joint 6 of carbon ramming paste to side blocks 7 installed on crown and edge brickwork 8. Cathode shell 9 houses all lining structures.

To arrange for recycling of non-graphitic carbon, the end wall of shell 9 has one or more precut process apertures 10 at level of layers 1 and 2. Console guide support 11 of roller 30 is attached in front of this aperture. Screw work tool 12 representing a continuously operating transporter comprises enclosure 13, which houses one or more horizontal screws 14 rotated by electric drive 15. To ensure passage of the screws through local zones of the recycled material impregnated with fluorides, hard-alloy drill heads 16 are installed at the inlet ends of the screws.

Screw work tool 12 is positioned in vertical plane using a telpher (not shown in Fig. 1b) connected to load ring 17. The extracted material is transferred to the carriage receiver consisting of conical fitting 18 and cylindrical fitting 19.

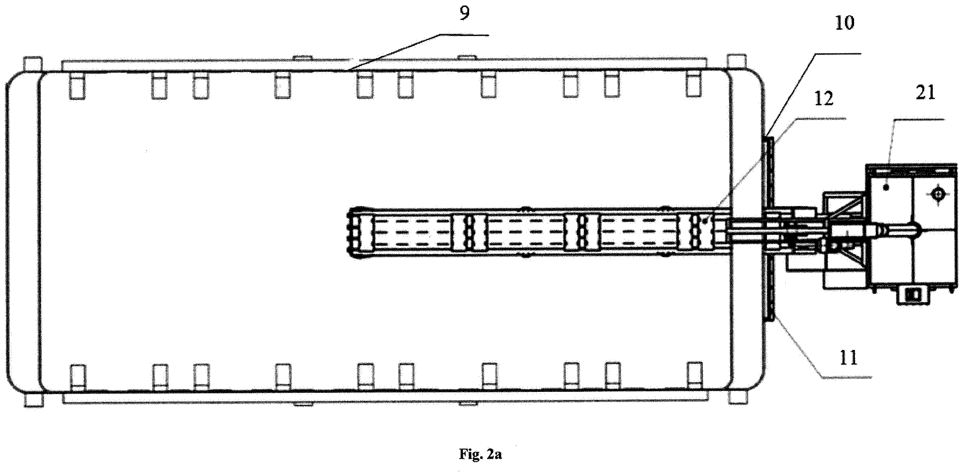

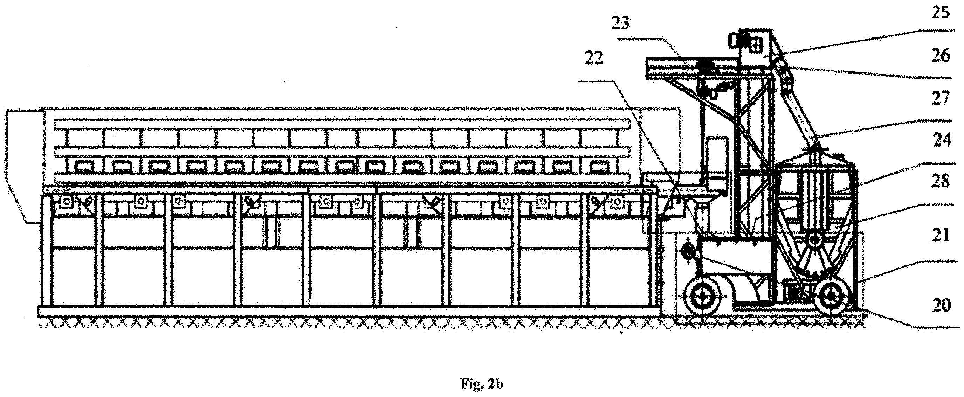

As a whole, the spent cathode lining material recycler design comprises (Figs. 2a, 2b) screw work tool 12, which inserts its inlet end to process aperture 10 located in the lower part of the end wall of cathode shell 9 on guide support 11 of roller 30. The outlet end of screw work tool 12 opposite to its inlet end is installed and rigidly attached to steering pillar 20 of carriage 21 in power fitting 22 with capability of vertical travelling to ensure alignment with the cathode long axis using telpher 23. An electromechanical vibrator is provided to prevent from the material hanging-up in the discharge part of screw work tool 12 at its outlet end (not shown in Figs. 2a and 2b). Power fitting 22 is connected to receiving chamber 24 of bucket elevator 25, while outlet end 26 of bucket elevator 25 is connected by detachable fitting 27 to hopper 28 for receipt of recycled non-graphitic carbon. Hopper 28, bucket elevator 25, and outlet end of screw work tool 12 are attached to carriage 21 capable to move the spent lining material recycler inside the pot cathode and out of it. To ensure the required location level of the process aperture in the cathode end wall in relation to the carriage power fitting, the cathode is preinstalled to a bench (not shown) before recycling.

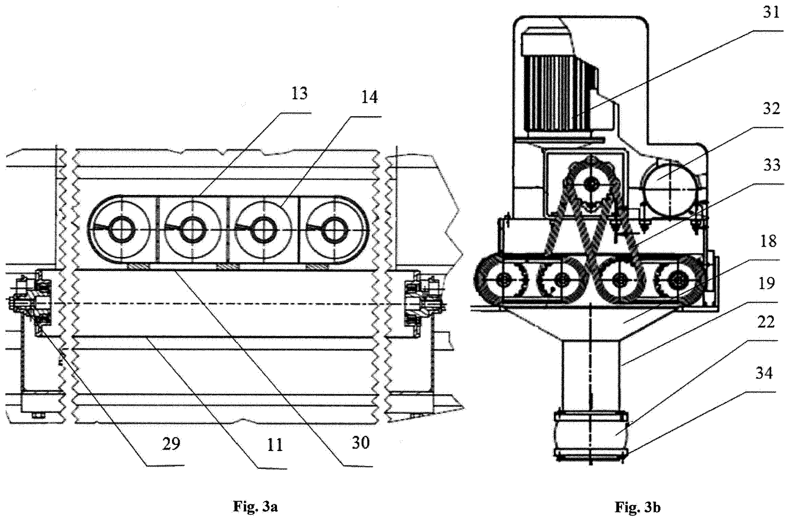

Screw work tool 12 comprises (Figs. 3a and 3b) enclosure 13, which houses one or more screws 14. The work tool is supported by guide support 11 of roller 30 preattached with brackets 29 to the lower part of cathode shell 9 so that the lower edge of process aperture 10 cut in the shell is at the same level with the upper generatrix of roller 30. The screws are rotated by electric drive 31, gear box 32, and chain gears 33 with capability of soft start and reversing. The material extracted by the screws is discharged through a combination of conical fitting 18 and cylindrical fitting 19 to power fitting 22 with sealing O ring 34 and then to receiving chamber 24 of bucket elevator 25 (not shown in Figs. 3a and 3b).

The substance of the proposed recycling method for spent pot cathode lining materials and recycler is illustrated by examples of the method specific implementation and recycler design (Figs. 1a, 1b, 2a, 2b, 3a, and 3b).

The spent lining material recycling method consists in the following:
- At least one process aperture is cut in the cathode end wall at level of the upper and lower heat insulation layers of the non-graphitic carbon lining material (Fig. 1a);
- The crown brickwork of the pedestal end wall is removed;
- The spent lining material is extracted;
- The extracted spent lining material is transferred to the installation location of the next aluminium pot cathode; and
- The extracted material is filled to this cathode as the lining material of the upper heat insulation layer.

The proposed spent lining material recycling method used during installation of aluminium pots is implemented using an appropriate recycler as follows.

Screw work tool 12 (Figs. 1b, 2a) is placed using a pot tending assembly (not shown) with its one (inlet) end on console guide support 11 of roller 30 (Figs. 1b, 2a, 3a) attached in front of process aperture 10 (Figs. 1b, 2a) and with its other (outlet) end to power fitting 22 (Figs. 2b, 3b) installed on steering pillar 20 of carriage 21 (Figs. 2a, 2b). The work tool drive connectors are connected to the mating connectors on the recycler control panel and the panel power supply circuit is connected to a three-phase 50 Hz / 380 VAC source.

Through movement of carriage 21 (Figs. 2a, 2b) towards the cathode (Figs. 1a, 2a) and adjustment of screw work tool 12 (Figs. 1b, 2a) alignment with cathode bottom (Figs. 1a, 2a) (vertical movement of the outlet end of the screw work tool using telpher 23 (Fig. 2a)), screw work tool 12 (Figs. 1b, 2a) is inserted through process aperture 10 (Figs. 1b, 2a) in the end wall of cathode shell 9 (Figs. 1a, 2a) at level of upper layer 2 and lower layer 1 (Fig. 1a) of the non-graphitic carbon lining material.

Upon contact with the extracted lining materials, the drive of screw work tool 12 (Figs. 1b, 2a) is actuated and transfer of the spent lining materials is started through fittings 18, 19 (Figs. 1b, 3b) to receiving chamber 24 of bucket elevator 25 (Fig. 2b) and then to hopper 28 (Fig. 2b). When screw work tool 12 (Figs. 1b, 2a) gets inside to its whole length, reverse movement of carriage 21 (Figs. 2a, 2b) pulls out screw work tool 12 (Figs. 1b, 2a) from the cathode cavity.

Then, the inlet end of screw work tool 12 is moved to the next area of the cathode end wall for extraction of the lining material and the process is repeated. The recycling method in this cathode can be repeated so long as there is a place in the pedestal, from which the lining material can be extracted.

When hopper 28 (Fig. 2b) is full, the material is transported to the installation location of the next aluminium pot cathode, where the spent material after recycling is filled to upper heat insulation layer 2 of the lining. Quantity of the recycled material is not less than 80% wt of the initial material. So, maximum 20% wt should be renewed, since non-recyclable monolithic sodium carbonate can be formed in the pedestal periphery. The material is reasonable to renew via laying of fresh batches of non-graphitic carbon directly on the bottom, since exactly the lower heat insulation layer being at relatively low temperatures mainly defines the total thermal resistance of the subcathode cavity.

The industrial tests of the proposed recycling method / recycler confirmed achievement of the technical result consisting in the following:
- Lesser quantity of wastes sent to storage;
- Lower costs for purchase of lining materials thanks to their recycling for primary use;
- Lower energy and labour costs for extraction of spent lining materials;
- Better sanitary-hygienic work environment of personnel thanks to elimination of material dusting;
- Total economic effect - more than $2,000 per pot annually.

## Claims

1. The lining material recycling method for an aluminium pot cathode with shell (9) and a pedestal made inside it including lower layer (1) and upper layer (2) of the non-graphitic carbon lining material and containing crown brickwork on its outside surface, where:
- At least one process aperture (10) is cut in the end wall of shell (9);
- The crown brickwork of the pedestal end wall is removed;
- The spent lining material is extracted from layers (1, 2) of non-graphitic carbon;
- The extracted lining material is transferred to the installation location of the next aluminium pot cathode; and
- It is filled as upper layer (2) of the cathode pedestal in this next pot.

2. The method according to claim 1, wherein the spent lining material is extracted through both end walls of the cathode.

3. The lining material recycler for an aluminium pot cathode with the method described in claim 1, which includes screw work tool (12) comprising at least one horizontal screw (14) capable to travel using carriage (21) fitted with bucket elevator (25) so that the inlet end of screw work tool (12) gets inside the cathode through process aperture (10) precut in the cathode end wall for extraction of the spent lining material and its transfer using bucket elevator (25) to hopper (28), while the outlet end of screw work tool (12) is placed on carriage (21).

4. The recycler according to claim 3, wherein guide support (11) of roller (30) is installed in the cathode end wall in front of process aperture (10) using brackets (29).

5. The recycler according to claim 3 or 4, wherein screw work tool (12) is capable to travel on guide support (11) of roller (30).

6. The recycler according to any of claims 3-5, wherein screw work tool (12) comprises four horizontal screws (14) enclosed in single housing (13).

7. The recycler according to any of claims 3-6, wherein screw/screws (14) is/are connected by chain gear (33) to electric drive (31) and gear box (32) with capability of soft start and reversing.

8. The recycler according to any of claims 3-7, wherein hard-alloy drill head (16) is installed at the inlet end of each screw (14).

9. The recycler according to any of claims 3-8, wherein the outlet end of screw work tool (12) is installed on steering pillar (20) of carriage (21) in power fitting (22) with capability of vertical travelling using a winch.

10. The recycler according to any of claims 3-9, wherein an electromechanical vibrator is provided to prevent from the material hanging-up at the outlet end of screw work tool (12).

11. The recycler according to any of claims 3-10, wherein the spent lining material can be extracted by reciprocating motion of screw work tool (12).
